# EUROPÄISCHE PATENTSCHRIFT

(11) **EP 0 835 423 B1**
(45) Veröffentlichungstag und Bekanntmachung des Hinweises auf die Patenterteilung: **02.05.2002**
(21) Anmeldenummer: 96918587.5
(22) Anmeldetag: 19.06.1996
(51) Int. Cl.: G01B 11/02

(54) **OPTISCHER ABSTANDSSENSOR**
OPTICAL DISTANCE SENSOR
CAPTEUR OPTIQUE DE DISTANCE

(30) Priorität: 30.06.1995 DE 19524022; 01.03.1996 DE 19608468
(43) Veröffentlichungstag der Anmeldung: 15.04.1998
(73) Patentinhaber: SIEMENS AKTIENGESELLSCHAFT, 80333 München (DE)
(72) Erfinder: DOEMENS, Günter, D-83607 Holzkirchen (DE); SCHICK, Anton, D-84149 Velden (DE); KÖLLENSPERGER, Paul, D-81475 München (DE)
(86) Internationale Anmeldenummer: DE9601081
(87) Internationale Veröffentlichungsnummer: WO9702466

(56) Entgegenhaltungen:
- WO-A-92/14118
- WO-A-93/11403
- DE-A- 1 949 117
- US-A- 4 719 341
- US-A- 4 965 442
- IBM TECHNICAL DISCLOSURE BULLETIN, Bd. 36, Nr. 9B, 1.September 1993, Seite 251/252 XP000397141 "VERTICAL POSITION SENSING WITH ROTATING PINHOLE CONFOCAL OPTICS"
- PATENT ABSTRACTS OF JAPAN vol. 018, no. 353 (P-1764), 4.Juli 1994 & JP,A,06 094437 (FUJITSU LTD), 5.April 1994,
- PATENT ABSTRACTS OF JAPAN vol. 6, no. 252 (P-161) [1130] , 10.Dezember 1982 & JP,A,57 148240 (NIPPON DENKI), 13.September 1982,
- PATENT ABSTRACTS OF JAPAN vol. 8, no. 204 (P-301) [1641] , 18.September 1984 & JP,A,59 088649 (IZUMI DENKI), 22.Mai 1984,

## Beschreibung

Die Erfindung betrifft einen optischen Abstandssensor und ein Verfahren zum Betrieb sowie die Verwendung eines optischen Abstandssensors nach dem konfokalen optischen Abbildungsprinzip zur Ermittlung von Abstands- bzw. Höhenwerten zu oder von einer Oberfläche eines Meßobjektes. Die ebenen Koordinaten der Vielzahl von Meßpunkten werden durch die laterale Verschiebung eines Abstandssensors relativ zu dem Meßobjekt vorgegeben, wobei ein Raster erzeugt wird.

Bevorzugte Einsatzgebiete liegen im Bereich der Verbindungsund Montageverfahren der Halbleiter- und Flachbaugruppenfertigung. In der Regel weisen Prüfobjekte einen dreidimensionalen Charakter auf, beispielsweise in der Form und Höhe der Löthöcker bei Ballgrid Arrays bzw. bei der Flip-Chip-Kontaktierung sowie in der Form von Nailheads beim Drahtbonden. Aus diesem Grund ist eine dreidimensionale schnelle Erfassung der zu überprüfenden Bereiche erforderlich. Dreidimensionale Sensoren üblicher Art genügen jedoch in der Regel den Anforderungen hinsichtlich annehmbarer Kosten und ausreichender Detektionssicherheit bei stark spiegelnden gekrümmten Flächen nicht.

Bei der Qualitätsprüfung in der Fertigung von elektronischen Teilen spielt neben der elektrischen Prüfung die äußere, meist optische Prüfung eine wesentliche Rolle. Da an die Verbindungs- und Montageverfahren der Halbleiter- und Flachbaugruppenfertigung ständig höhere Anforderungen hinsichtlich Qualität gestellt werden, müssen die entsprechend eingesetzten Prüfverfahren zunehmend verfeinert werden. So werden beispielsweise Fehlerraten von weniger als 10 dpm (Defekte pro 10⁶) gefordert. Lediglich durch die Optimierung der Prozesse läßt sich dieses hochgesetzte Ziel nicht mehr erreichen.

Letztendlich wird nach annähernd jedem Verfahrensschritt eine automatische Inspektion gefordert.

Zweidimensionale Bildverarbeitungsverfahren üblicher Art genügen in der Regel nicht den heutigen Anforderungen.

Zur dreidimensionalen Erfassung von Oberflächen werden häufig noch Triangulationsverfahren eingesetzt. Bei einer Auflösung von beispielsweise 10 µm sind diese Verfahren jedoch aus optischen Gründen, wie beispielsweise Sekundärlichtreflexionen, deutlich eingeschränkt. Wesentlich besser sind hierfür konfokale Systeme mit einer koaxialen Strahlanordnung geeignet. Die erzielbare Datenrate ist jedoch aufgrund des mechanisch bewegten Objektives sehr begrenzt.

In der einen optischen Abstandssensor betreffenden europäischen Patentschrift EP 0 615 607 wird eine Erhöhung der Datenrate auf 2 MHz sowie eine flächenhafte Erfassung mit dem konfokalen Prinzip beschrieben. Die hohe Datenrate wird durch ein scannendes System erreicht, das auf einer schnellen Strahlablenkung basiert. Die relative Bewegung des Prüfobjektes zum Abtastsensor erfolgt mäanderförmig. Zur Vermeidung von mechanischen Bewegungen des Objektives wird durch auf dem Meßstrahl axial gestaffelte Detektoren auf der Bildseite eine Höhenermittlung durchgeführt. Dieses technisch hoch entwickelte Prinzip ist jedoch mit sehr hohen Kosen verbunden. In der dreidimensionalen Oberflächenvermessung werden auf jeden Fall in zunehmendem Maße konfokale Prüfmethoden eingesetzt, die je nach Ausführung weitgehend unabhängig von den optischen Eigenschaften der Oberflächen sind. Dies wird idealerweise dadurch erreicht, daß die Objektoberfläche punktförmig beleuchtet wird und das reflektierte Licht wird wiederum auf einen punktförmigen Detektor abgebildet. Je kleiner die beleuchtete Fläche und die hierzu korrespondierende Detektorfläche ist, desto größer wird das Auflösungsvermögen und desto mehr werden Störungen durch sekundäres Streulicht und Fehlmessungen durch die Form bzw. durch die Krümmung im Bereich des Meßfleckes unterdrückt. Dies kann mathematisch so formuliert werden, daß selbst stark gekrümmte spiegelnde Flächen als eben erscheinen, wenn der Meßfleck sehr viel kleiner ist als der Krümmungsradius der Fläche.

In der WO-A-92/14118 wird ein optischer Sensor beschrieben, der mit strukturiertem Licht funktioniert. Die Lichtquelle ist dabei derart einstellbar, daß ein Wechsel der Positionen von kontrastreichen Bereichen in einem Muster durchführbar ist, wobei eine Anordnung von Detektorelementen den Detektor bilden. Dabei werden jeweils zwei Bilder für sich auf einem Objekt fokussiert, wobei die Fokussierung des ersten Bildes auf dem Objekt verändert wird.

Aus der US-A-4 719 341 ist ein sog. proximity sensor bekannt. Dabei wird die optische Weglänge verändert, jedoch an keiner Stelle ein Zwischenbild erzeugt. Es gelangen nicht konvergente Lichtbündel an verstellbare Spiegel, so daß die Anforderungen an ein konfokales System (punktförmige Lichtquelle, punktförmiger Detektor, Objekt fokussiert) nicht gegeben sind.

Konventionelle käuflich erhältliche konfokale Mikroskope besitzen durchaus diese optischen Eigenschaften, sind jedoch in der Regel aufgrund des erforderlichen mechanischen Nachführens der Objekte bzw. der Mikroskopobjektive für den Einsatz in der Fertigung zu langsam.

Der Erfindung liegt die Aufgabe zugrunde, einen konfokalen optischen Abstandssensor, ein Verfahren zum Betrieb sowie eine Verwendung eines optischen Abstandssensors zu schaffen, wobei bei geringen System- und Verfahrenskosten eine automatische Oberflächenprüfung mit hoher Datenrate ermöglicht wird.

Die Lösung dieser Aufgabe geschieht durch die Merkmale der Ansprüche 1, 2, 3, 8 oder 10.

Der Erfindung liegt die Erkenntnis zugrunde, daß der Einsatz einer einzigen Empfangseinheit auf der Bildseite mit gleichzeitiger periodischer Variation der optischen Wegstrecke zwischen dieser Empfangseinheit und der Abbildungsoptik einen optischen Abstandssensor mit hoher Datenrate liefert. Der Höhenwert eines abgetasteten Punktes auf der Oberfläche eines Meßobjektes ergibt sich, indem ein in der Empfangseinheit aufgenommenes Maximum der Leuchtdichte des Meßstrahles mittels eines Peakdetektors detektiert wird und gleichzeitig die besagte korrespondierende optische Wegstrecke, die dem Höhenwert entspricht, festgehalten wird.

Eine weitere Lösung, die die Anwendbarkeit eines Sensors bei bestimmten Montageverfahren von elektronischen Bauelementen, insbesondere bei der Inspektion von Löthöckern mit spiegeln-den Oberflächen bei kleinsten Krümmungsradien erschließt, lautet wie folgt:
Zur Erzeugung eines reellen Zwischenbildes, in dem die konfokal angeordneten punktförmigen Lichtquellen und Empfänger überlagert werden, wird simultan mit Hilfe eines auf der optischen Achse mechanisch bewegten (oszillierenden) Spiegelsystems die Strahlrichtung mit einem Parallelversatz um 180° umgelenkt. Das entstehende reelle Zwischenbild wird anschließend durch eine geeignete Optik auf das Objekt abgebildet. Das vom Objekt zurückgestreute Licht wird rückwärts über dieselbe oszillierende Spiegelanordnung auf die stationären Empfänger geführt. Der Strahlengang zwischen Lichtquelle und Objekt und der Strahlengang zwischen Objekt und Empfänger ist jeweils zweimal über eine bestimmte Abbildungsoptik geführt. Die aktuelle Position des Spiegelsystems, bei der die maximale Leuchtdichte gemessen wird, entspricht dem momentanen Höhenwert auf der Objektoberfläche.

Die der Erfindung zugrundeliegende Aufgabe wird außerdem durch einen Sensor gelöst, bei dem ebenfalls ein schwingendes Spiegelsystem bestehend aus zwei um 90° zueinander geneigten Spiegeln bewegt und ein reelles Zwischenbild erzeugt wird. Im Gegensatz zu dem zuvor beschriebenen konfokalen Sensor wird der Strahlengang zwischen Lichtquelle und Objekt und der Strahlengang zwischen Objekt und Empfänger nicht zweimal sondern nur einmal über eine bestimmte Abbildungsoptik geführt. Die Abbildung von Lichtquelle und Empfänger auf die zu vermessende Objektoberfäche erfolgt über einen zusätzlichen Umlenkspiegel.

Eine vorteilhafte Ausgestaltung der Erfindung sieht den Einsatz mehrerer optischer Empfänger in der Empfangseinheit vor. Deren Anordnung relativ zur optischen Achse ist vorgegeben, wobei auf der Sendeeinheit die gleiche Anzahl von Lichtquellen korrespondierend vorhanden ist. Somit ergibt sich eine gleichzeitige zeilenförmige Anordnung von Meßpunkten auf der Objektoberfläche und ein Zusammenspiel von beispielsweise einer ersten Lichtquelle mit einem ersten Empfänger und einer zweiten Lichtquelle und einem zweiten Empfänger und so fort. Würden bei einer derartigen Anordnung von Leuchtquellen beispielsweise mehrere Abtastpunkte auf der Oberfläche des Meßobjektes gleichzeitig angesprochen, so wäre eine empfangsseitige Trennung des Ortes nicht möglich. Anders ausgedrückt würde ein "Übersprechen" eindeutige Messungen verhindern. Somit ist die Datenrate für diese Ausführungsform insofern begrenzt, als ein serielles Abtasten für die einzelnen Abtastpunkte mit einer Lichtquelle und einem entsprechenden Empfänger notwendig ist. Wesentlich ist die Variation der optischen Wegstrecke zwischen Objekt und Empfangseinheit bzw. auch zwischen Objekt und Sendeeinheit entweder durch mechanische Bewegung des Empfängers oder durch die Bewegung eines Spiegelsystems, das im Strahlengang positioniert ist, in Kombination mit der parallelen Anordnung von Empfängern und Sendern und der Trennung der einzelnen Sende-/Empfangskanäle durch zeitliche Variation der Intensität (Zeitpmultiplex). Der Einsatz eines Spiegelsystems anstelle des schwingenden Empfängers ist dann zu empfehlen, wenn die Auslegung des schwingenden Empfängers hinsichtlich Größe und Rastermaß an die Dimensionierungsgrößen stößt. Zur Erzeugung einer Schwingung sollte die Größe des Empfängers so klein wie möglich sein, wodurch die optomechanische Handhabung jedoch erschwert wird, indem die Zahl der gleichzeitig anwendbaren Lichtquellen stark eingeschränkt wird.

Eine Differenzierung mehrerer gleichzeitig eingeschalteter Lichtquellen ist empfangsseitig möglich, indem die unterschiedlichen Lichtquellen unterschiedliche Lichtfrequenzen aufweisen. Sendeseitig geschieht dies durch entsprechende Modulation der einzelnen Lichtquellen mit unterschiedlichen Frequenzen. Empfangsseitig wird durch eine zwischen Empfangseinheit und Peakdetektor geschaltete Bandpaßanordnung jeweils differenziert, zu welchem Abtastpunkt, der mit einem Licht bestimmter Frequenz erzeugt wird, der detektierte Peak in der Leuchtdichte gehört.

Eine andere vorteilhafte Ausgestaltung der Erfindung zur Abtastung der Oberfläche eines lateral rechtwinkelig ausgebildete Meßobjektes, wie beispielsweise einer Flachbaugruppe mit darauf befindlichen elektronischen Bauelementen, sieht vor, daß die Reihe von gleichzeitig erzeugten Abtastpunkten durch entsprechende Anstellung des Abstandssensors bzw. relativ zum Meßobjekt in Bezug auf einen allgemeinen Verfahrweg eine laterale Anstellung von 45° aufweist. Sind beispielsweise bei üblichen Meßobjekten orthogonale Abtastbahnen vorgesehen, beispielsweise ein Rahmen, so ist durch die genannte Maßnahme ein Drehen des Abtastkopfes bei einem Richtungswechsel im Verfahrweg um 90° eine Drehung des Abtastsensors bzw. Meßkopfes relativ zum Meßobjekt nicht notwendig.

Die der Erfindung zugrundeliegende Aufgabe wird ebenso durch ein Verfahren gemäß Anspruch 8 sowie durch eine Verwendung gemäß Anspruch 10 gelöst.

Im folgenden wird anhand von schematischen Figuren ein Ausführungsbeispiel beschrieben:
Figur 1 zeigt eine Prinzipskizze mit einem erfindungsgemäßen konfokalen optischen Abstandssensor,
Figur 2 zeigt einen Ausschnitt einer mit Bondverbindungen 20 versehenen Oberfläche 13 eine elektronischen Bauelementes 19 mit Bonddrähten 21,
Figur 3 zeigt die Oberfläche eines elektronischen Bauelementes 19 mit in ungefähr rechtwinkliger Anordnung darauf aufgebrachten Bondverbindungen 20,
Figur 4 zeigt korrespondierend mit Figur 3 die lateralen Anordnungen am Einbauplatz 25 eines elektronischen Bauelementes mit Lotdepots 23 auf einer entsprechenden Leiterplatte,
Figur 5 zeigt eine Prinzipdarstellung eines Systems mit einer schwingenden Empfangseinheit 4,
Figuren 6a und 6b zeigen zum einen die vollständige dreidimensionale Erfassung einer Flachbaugruppe und andererseits die partielle Erfassung der Flachhbaugruppenoberfläche,
Figur 7 zeigt eine Anordnung eines konfokalen optischen Systemes, indem mittels eines schwingenden Spiegelsystemes 30 die optische Wegstrecke variierbar ist und
Figuren 8a, 8b und 8c zeigen schematisch die Bewegungen des Spiegelsystemes und des an dieser Stelle erzeugten Zwischenbildes,
Figur 9 zeigt eine Variante des Systemes nach Figur 7.

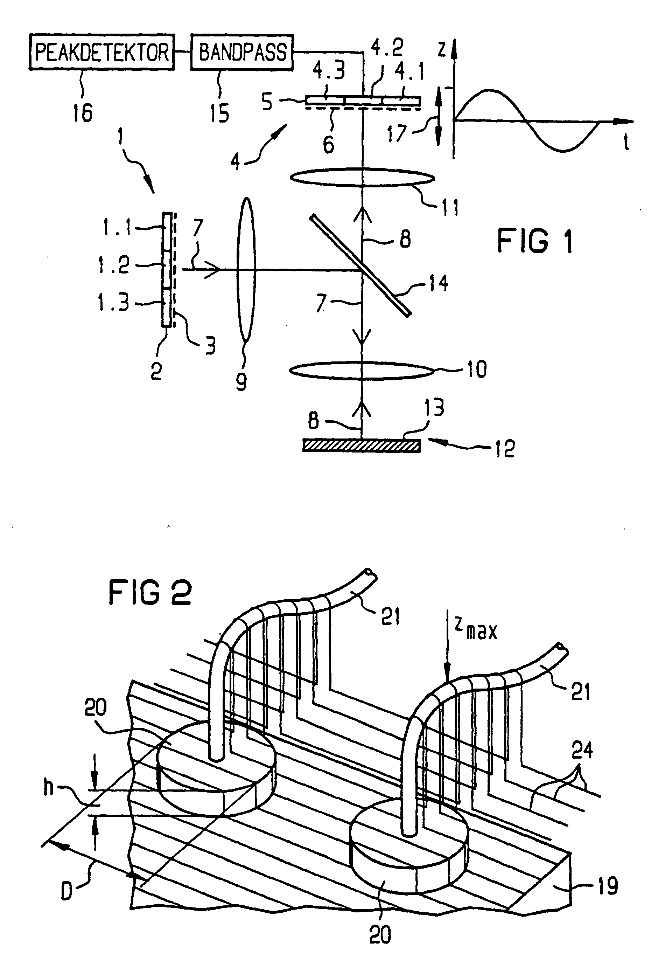

In der Figur 1 wird ein optischer Abstandssensor nach dem konfokalen Prinzip dargestellt. Ein derartiger Sensor arbeitet mit punktförmigen Lichtquellen 2, die auf die Oberfläche 13 eines Meßobjektes 12 abgebildet werden. Das vom Meßobjekt 12 rückgestreute Licht wird in einen ebenfalls punktförmigen Empfänger bzw. eine Empfangseinheit 4 abgebildet. Das Meßobjekt 12 und das erzeugte Bild bzw. die Empfangseinheit befinden sich im Fokus des Beleuchtungsstrahles- 7 bzw. des Meßstrahles 8. Der Beleuchtungsstrahl ist hierbei statisch und legt aufgrund seiner Schärfentiefe den Höhenmeßbereich fest. Eine weiterführende Beschreibung des konfokalen Prinzips ist beispielsweise der europäischen Patentschrift EP 0 615 607 zu entnehmen.

Auf der Sendeseite ist in Figur 1 eine Sendeeinheit 1 dargestellt. Diese enthält eine oder mehrere punktförmige Lichtquellen 1.1,1.2, ..., jeweils bestehend aus einer Lichtquelle 2 und einer Blende 3. Hierdurch wird der Beleuchtungsstrahl 7 erzeugt. Die Optik 9,10,11 wirkt als Ganzes zusammen und stellt die Abbildungsoptik dar. Unter der periodisch variierbaren optischen Wegstrecke zwischen der Empfangseinheit 4 und der Abbildungsoptik ist in diesem Fall die Wegstrecke zu der Optik 11 zu verstehen. Der Beleuchtungsstrahl 7 wird über den Teilerspiegel 14 in Richtung auf das Meßobjekt 12 mit der Oberfläche 13 geleitet. Der reflektierte Meßstrahl wird mittels der Optik 10 und 11, sowie dem Teilerspiegel 14 der Empfangseinheit 4 zugeführt. Die Empfangseinheit 4 besteht aus Fotoempfängern 5 mit jeweils zugehörigen Blenden 6, so daß punktförmige Empfänger 4.1,4.2,... dargestellt werden. Nachdem die Masse der Abbildungsoptik oder Teilen davon relativ groß ist, so ist es zur Erzeugung der Variation der optischen Wegstrecke in der Praxis günstiger, die Empfangseinheit 4 in Richtung der optischen Achse in Schwingungen zu versetzen. Dies wird durch das seitwärts dargestellte Höhenwert z/Zeit t-Diagramm angedeutet. Die Schwingungsrichtung 17 ist parallel zur optischen Achse des Systems im bildseitigen Meßbereich. Die Schwingung, beispielsweise 2 kHz, ist periodisch, insbesondere sinusförmig.

Theoretisch wäre der Einsatz einer einzigen punktförmigen Lichtquelle 1.1 und eines einzigen punktförmigen Empfängers 4.1 möglich. Die hiermit erzielbare Datenrate bei der Abtastung einer gesamten Oberfläche eines Bauelementes 19 ist jedoch sehr gering. Wird die Anzahl der punktförmigen Lichtquellen und Empfänger erhöht, so korrespondieren jeweils eine erste Lichtquelle mit einem ersten Empfänger, eine zweite Lichtquelle mit einem zweiten Empfänger und so fort. Anstelle einer seriellen Abtastung sind die Lichtquellen bzw. das Licht der verschiedenen Lichtquellen unterschiedlich moduliert, so daß es unterschiedliche Frequenzen aufweist. Somit kann entsprechend der Anzahl von Lichtquellen/Empfänger-Paarungen eine entsprechende Anzahl von Abtastpunkten 18 in einer geraden Linie auf der Oberfläche 13 erzeugt werden. Wie bereits beschrieben, wird für jeden Punkt annähernd gleichzeitig ein Höhenwert ermittelt.

In der Figur 2 ist ein Ausschnitt aus der Oberfläche eines elektronischen Bauelementes 19 dargestellt mit Bondverbindungen 20 und Bonddrähten 21 befestigt. Spezifizierungen erlauben eine maximale Höhe zₘₐₓ, um in nachgeschalteten Verfahrensschritten die Bonddrähte 21 nicht zu beschädigen. Ferner müssen Höhe h und Durchmesser D der Bondverbindungen 20 bestimmte Werte einhalten. Die in Figur 2 eingezeichneten Linien 24 stellen den allgemeinen Verfahrweg 24 dar. Ob eine oder mehrere Lichtquellen/Empfänger-Paarungen mit der entsprechenden Anzahl von Abtastpunkten 18 eingesetzt werden, bestimmt zunächst die Anforderung bezüglich der Abtastgeschwindigkeit. Die Tatsache, daß mehrere Abtastpunkte 18 gleichzeitig erzeugbar sind, ist jedoch in dem Zusammenhang zu sehen, daß der Sensorkopf bzw. Abtastsensor insgesamt eine laterale Relativbewegung zu der Oberfläche 13 des Meßobjektes 12 aufweist.

Das erfindungsgemäß beschriebene Mikroskop hat im wesentlichen das Anwendungsziel die dreidimensionale optische Prüfung von Elektronikeinheiten deutlich kostengünstiger und schneller zu machen. Hierzu wird eine konfokale Höhenmessung gleichzeitig an mehreren auf einer Linie angeordneten Meßpunkten durchgeführt, sodaß bei Bewegung des Meßobjektes relativ zum Sensor ein Band (Zeile, Reihe) von parallelen Abtastpunkten entsteht, beispielsweise 30 Stück. Diese Struktur des Sensors und die damit erreichbaren Prüfgeschwindigkeitenn sind insgesamt nur dann sinnvoll, wenn mit diesem Band im wesentlichen nur die Randbereiche von elektronischen Bauelementen erfaßt werden, in denen sich beispielsweise Lötstellen befinden, die zu überprüfen sind. Dadurch wird bei einer üblichen elektronischen Baugruppe die Abtastung auf etwa 5% der gesamten Flachbaugruppe reduziert. Der Aspekt der partiellen Oberflächenerfassung in Verbindung mit dem parallelarbeitenden konfokalen Mikroskop ist wesentlich und führt erst zu einem akzeptablen Preis-/Leistungsverhältnis. Die partielle und flexible Erfassung eröffnet auch die Möglichkeit, die Prüfung nur auf kritische Bereiche zu erstrecken.

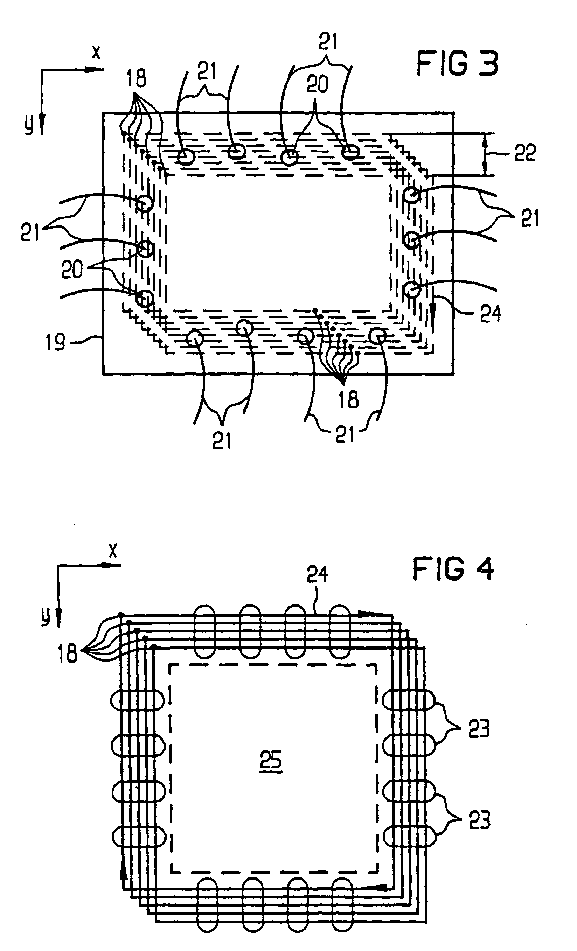

Figur 3 zeigt ein elektronisches Bauelement 19, auf dessen nach oben gerichtete Oberfläche 13 mehrere Bondverbindungen 20 in orthogonaler Anordnung plaziert sind. Die Bondverbindungen werden durch Bonddrähte 21 mit elektrischen Anschlußpunkten auf beispielsweise einem nicht dargestellten Systemträger verbunden. Der Einsatz eines optischen Abstandssensors entsprechend der Erfindung erzeugt eine geradlinige Reihe von Abtastpunkten 18. Nachdem an dem Bauelement 19 lediglich die Bondverbindungen 20 bzw. die entsprechenden Bonddrähte 21 zu prüfen sind, ist für den allgemeinen Verfahrweg 24 des Sensors relativ zum Bauelement 19 eine Art Rahmen abzufahren, der ebenfalls orthogonal ausgestaltet ist. Nachdem die hier dargestellte Reihe von Abtastpunkten 18 zu diesem Verfahrweg 24 unter 45° angestellt ist, erübrigt sich ein Drehen des Prüfkopfes mit dem Abstandssensor. Fährt der Abstandssensor den in den Figuren 3 bzw. 4 dargestellten Verfahrweg 24 ab, so wird jeweils eine Art Korridor parallel zur X-Achse bzw. parallelel zur Y-Achse erfaßt, der eine Breite 22 von beispielsweise 256 µm aufweist. Dabei sind beispielsweise 16 Abtastpunkte 18 in einer Reihe.

Die Figur 4 zeigt ebenfalls in ebener Darstellung entsprechend Figur 3 einen Verfahrweg 24, mit dem die zu prüfenden Lotdepots 23 abgetastet werden. Die Ausbildung des orthogonalen Rahmens für den Verfahrweg 24 gilt in diesem Falle analog. Ein Bauelement 19 ist zu diesem Zeitpunkt am Einbauplatz 25 noch nicht vorhanden. Bei dieser Anwendung werden Position, Form und Volumen der Lotpastendepots geprüft.

Die mechanische Bewegung eines Empfängers wird erleichtert, wenn dessen Masse gering ist. Aus diesem Grund müssen sowohl die Empfangseinheit 4 als auch eine parallele Lichtquellenanordnung hinsichtlich der Größe und der Rastermaße sehr klein dimensioniert werden, wodurch die optomechanische Handhabung erschwert wird und die Zahl der gleichzeitig anwendbaren Lichtquellen bzw. Abtastpunkte 18 stark eingeschränkt wird.

Bei einer parallelen Anordnung von Sendern und Empfängern kann es zu optischem Übersprechen und somit zu Fehlmessungen kommen. Dies tritt insbesondere dann in Erscheinung, wenn die Beleuchtungsfleckdurchmesser bzw. die korrespondierenden Blendendurchmesser groß sind im Verhältnis zu den seitlichen Abständen. Da bei einer Konfiguration mit einem bewegten Empfänger die Rayleigh-Länge des an sich starren Beleuchtungsstrahles den Höhenmeßbereich vorgibt, muß der Öffnungswinkel klein dimensioniert werden. Dies hat zur Folge, daß der Meßfleckdurchmesser selbst im Bereich der Strahltaille relativ groß ist. Übersprechen muß daher durch eine Maßnahme, wie beispielsweise zeitliche Variation der Intensität oder Differenzierung durch unterschiedliche Frequenzen des Lichtes unterdrückt werden. Der konfokale Detektor in Verbindung mit einem schwingenden Spiegelsystem weist insbesondere Vorteile auf:
- Konfokale Detektoranordnung und Lichtquellenanordnung können durch entsprechende Wahl der Linsen verkleinert in das bewegte Zwischenbild abgebildet werden. Dadurch können die Spiegel sehr klein dimensioniert werden und entsprechend hohe Frequenzen bei den oszillierenden Spiegeln erzielt werden.
- Hinsichtlich der Dimensionierung von Rasterabständen der Lichtquellen und der Detektoren besitzt man große Auswahlmöglichkeiten, da der Vergrößerungsmaßstab durch entsprechende Auslegung der Abbildungsoptiken eingestellt werden kann.
- Der Höhenmeßbereich wird nicht mehr durch die Form des Beleuchtungsstrahles vorgegeben, sondern durch die Wahl der Optiken in Verbindung mit der Amplitude der mechanischen Schwingung des Spiegelsystemes 30. Bei dem beschriebenen Spiegelsystem bewegt sich das Zwischenbild um die doppelte Amplitude der Spiegeloszillation.
- Da die Brennebene des Beleuchtungsstrahles im Objektbereich mitbewegt wird, kann die numerische Apertur des Beleuchtungsstrahles und das Auflösungsvermögen in axialer und lateraler Richtung (Höhe und Breite) erhöht werden.
- Im Parallelbtrieb ist für jede Lichtquelle ein korrespondierender Empfänger vorhanden, wobei ein optisches Übersprechen zu Fehlmessungen führen kann. Das Übersprechen wird umso größer, je größer der Durchmesser der konfokalen Detektorfläche relativ zum Abstand der Empfänger zueinander ist. Wegen der konfokalen Abbildung ist der Abstand der einzelnen Lichtquellen zueinander proportional zum wechselseitigen Abstand der Detektoren. Wählt man daher z.B. Lichtquellen mit großen Leuchtfleckabständen bei gleichbleibendem Abstrahlwinkel bzw. Leuchtfleckgrößen und verkleinert diese auf das erforderliche Maß in den Zwischenbild- bzw. Objektbereich, so kann das Übersprechen erheblich reduziert werden. So kann beispielsweise eine Laserdiodenanordnung mit einem Rastermaß von 125 µm statt mit einem Rastermaß von 25 µm eingesetzt werden. In diesem Fall kann unter Umständen auf eine elektronische Unterdrückung des Übersprechens gänzlich verzichtet werden, was wiederum den technischen Aufwand und damit die Kosten eines derartigen Sensor verringert.
- Aufgrund der Unterdrückung des Übersprechens durch eine geeignete Wahl des Verhältnisses von Meßfleckdurchmesser zu Meßflecksabstand müssen die Lichtquellen nicht getrennt angesteuert werden oder durch unterschiedliche Frequenzen differenzierbar sein. Dadurch wird eine parallele Oberflächenabtastung mit nur einer einzigen Lichtguelle ermöglicht. Die Strahlaufspaltung in die verschiedenen Sendekanäle kann dann z.B. mittels lichtbeugender Elemente erfolgen.

Das erfindungsgemäße System nach Anspruch 1 kommt ohne strahlablenkende scannende Einheiten aus. Ebenso werden keinerlei gestaffelt entlang des Meßstrahles angeordnete Empfänger eingesetzt. Die einzige vorhandene Empfangseinheit kann beispielsweise piezoelektrisch; magnetostriktiv oder elektromagnetisch bewegt werden. Eine für praktische Anwendungen ausreichende Oszillationsfrequenz liegt bei 2 kHz. Gleichzeitig wird die Steigerung der Datenrate durch Einsatz mehrerer Lichtquellen 1,1,1.2,...in der Sendeeinheit 1 und mehrerer korrespondierender Empfänger 4.1., 4.2, ... der einzigen Empfangseinheit 4 erzielt. Als Empfänger können beispielsweise integrierte Fotodiodenzeilen verwendet werden. Als Lichtquellen werden vorzugsweise Laserdioden-Arrays verwendet. Die bisherige Beschreibung ging von der Verwendung von Blenden 3,6 aus, da die Lichtquellen 2 bzw. die Fotoempfänger 5, soweit übliche Typen im normalen Kostenrahmen verwendet werden, nicht als punktförmig betrachtet werden können. Bei Lasern ist die Verwendung von Blenden nicht notwendig.

Es kann jedoch jederzeit die Intensität der parallelen Lichtquellen 2 nach jeweils unterschiedlichen Gesetzmäßigkeiten zeitlich verändert werden, so daß auf der Empfängerseite eine eindeutige Zuordnung und damit ein Übersprechen absolut eliminiert wird. Für langsame Anwendungen ist auch ein serieller Betrieb der Lichtquellen 2 und der Fotoempfänger 5 möglich. In diesem Fall ist die Anordnung eines einzigen Fotodetektors hinter einem Lochblenden-Array ausreichend.

Wird zur Erzeugung einer hohen Datenrate der parallele Betrieb von mehreren Sende-Empfangseinheiten eingesetzt, so ist zunächst bei der Bewegung eines Meßobjektes 13 in einer Richtung nur die Abtastung von Zeilen möglich. In der Regel ist bei den Verbindungs- und Montageverfahren der Halbleiter- und Flachbaugruppentechnik die Überwachung der Randbereiche eines Chips oder eines Bauelementes 19 ausreichend. Diese Bereiche erstrecken sich jedoch auf den vollen Umfang des Bauelementes. Um bei derartige erforderlichen orthogonalen Abtastbahnen den Sensorkopf nicht drehen zu müssen, wird die Achse der zeilenförmig korrespondierend angeordneten Sender und Empfänger und damit entsprechend die Ausrichtung der Reihe von Abtastpunkten auf der Oberfläche 13 unter 45° zu der Abtastrichtung orientiert.

Die mechanische schwingende Bewegung des Empfängers (Anspruch 1) der Bildseite, sowie die parallele Anordnung von mehreren Empfängern und Sendern jeweils nebeneinander ist einfach und kostengünstig zu realisieren. Die Trennung der einzelnen Sende- und Empfangskanäle durch unterschiedliche Lichtfrequenzen erhöht die Trennschärfe zwischen den einzelnen Kanälen. Die 45°-Anordnung der Reihe von Abtastpunkten relativ zu den orthogonalen Abtastrichtungen vereinfacht die Führung des Prüfkopfes. Es erfolgt zweckmäßigerweise keine vollständige Erfassung der Szene, sondern es werden lediglich die Bereiche erfaßt, die geprüft werden sollen und die im wesentlichen im Randbereich auf einer großflächigen Oberfläche eines elektronischen Bauelementes plaziert sind. Der Einsatz eines Systemes mit einem Spiegelsystem zur Variation der optischen Wegstrecke erbringt darüber hinausgehende oben erwähnte technische Vorteile, die mit einer weiteren Erkennungssicherheit und zusätzlicher Kosteneinsparung verbunden sind.

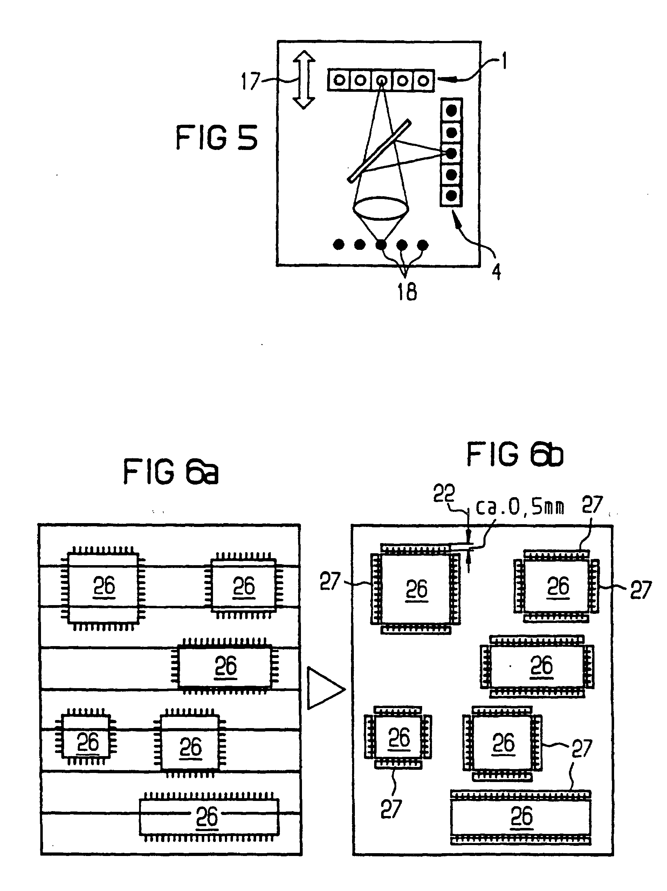

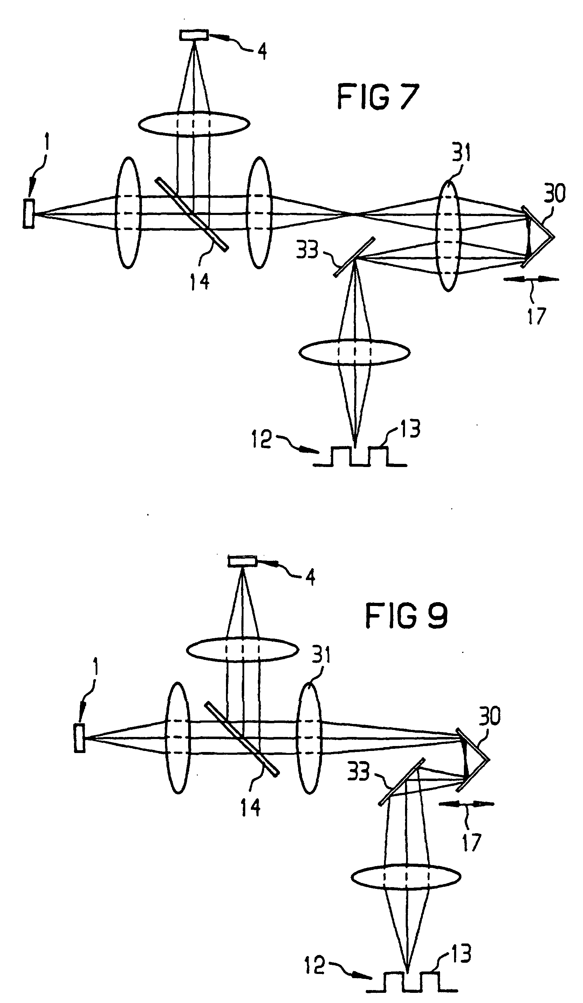

In der Figur 5 wird eine stark vereinfachte Prinzipskizze eines Systems mit schwingenden Empfänger dargestellt, wobei folgende typische Werte des Verfahrens angeführt werden können:

| | |
|---|---|
| Auflösung (x,y,z) | 10 µm |
| Höhenmeßbereich | 500 µm |
| Parallele Abtastspuren | 30 Stück |
| Datenrate | 150 kHz |
| Verfahrgeschwindigkeit | 4 cm/sec |

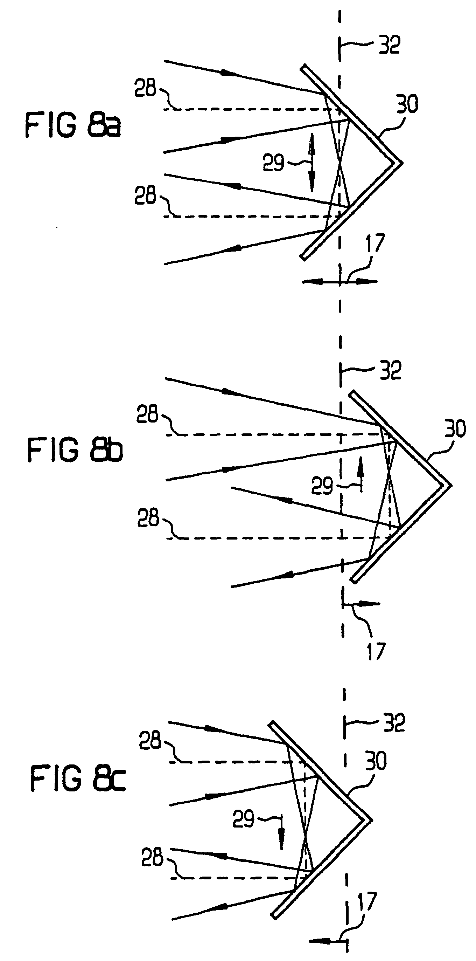

In den Figuren 6a und 6b wird die wesentliche Zeit und Kostennersparnis sichtbar, indem die abzutastenden Bereiche jeweils dargestellt werden. In Figur 6a betrifft die dreidimensionale Erfassung der Oberfläche die gesamte Flachbaugruppe bestehend aus beispielsweise einer Leiterplatte mit darauf befindlichen Bauelementen 26. Der Abtastbereich ist vollflächig. In Figur 6b werden lediglich partielle Abtastungen vorgenommen. Die Abtastbereiche 27 sind orthogonale Streifen, durch deren Abtastung and Auswertung die Lötstelleninspektion an den elektrischen Verbindungen der Bauelemente 26 vollständig gewährleistet ist. Die partielle Erfassung der Oberfläche der Flachbaugruppe beträgt beispielsweise 5 % der Gesamtfläche.

Figur 7 zeigt den Aufbau eines konfokalen Mikroskopes bestehend aus einer Sendeeinheit 1, einer Emfangseinheit 4, einem Teilerspiegel 14, einem Spiegelsystem 30 und einem System von Abbildungsoptiken. Dabei kann die Oberfläche 12 des Meßobjektes 13 abgetastet werden und ein Höhenbild davon erzeugt werden. Das Spiegelsystem 30 besteht aus einer Einheit von zwei gegeneinander um 90° versetzten und verbundenen oder zumindest gleichförmig bewegbaren Spiegeln. Das System wird in der Schwingungsrichtung 17 bewegt. Durch diese Schwingung wird die optische Wegstrecke in ihrer Länge variiert. Die Schwingung ist vorzugsweise eine sinusförmige Schwingung. Die Frequenz kann beispielsweise bei 2 MHz liegen. Unter optischer Wegstrecke kann entsprechend Figur 7 zunächst die Wegstrecke zwischen der Abbildungsoptik 31 und dem Spiegelsystem 30 betrachtet werden. Wesentlich sind jedoch die Veränderungen im Strahlengang zwischen der Abtastung der Objektoberfläche 13 und der Empfangseinheit 4 bzw. der Sendeeinheit 1. Am Spiegelsystem 30 wird ein Zwischenbild erzeugt, in welchem die konfokal angeordneten punktförmigen Lichtquellen der Sendeeinheit 1 und der Detektoren der Emfangseinheit 4 überlagert werden. Am Spiegelsystem 30 werden die Strahlen durch den in Figur 7 sichtbaren Aufbau um insgesamt 180° zurückgespiegelt. Dies geschieht jedoch mit einem Parallelversatz, so daß der Strahlengang zweifach durch die Abbildungsoptik 31 geführt wird. Die Symmetrieachse des Spiegelsystems 30 liegt auf der optischen Achse der Abbildungsoptik 31. Weiterhin liegt das Spiegelsystem 30 im konvergenten Bereich der Lichtbündel auf einer Seite der Abbildungsoptik 31.

Die Figuren 8a, 8b, 8c stellen den Strahlengang am Spiegelsystem 30 dar, wobei die Null-Lage 32 und die Bewegung des Spiegelbildes während der Schwingung des Spiegelsystems 30 angedeutet sind. In Figur 8a befindet sich das Spiegelsystem 30 ungefähr in der Null-Lage bezogen auf die Schwingungsrichtung 17. Die Achsstrahlen (die annähernd achsialen oder achsparallelen Strahlen) 28 werden um 2 x 90° gespiegelt.
Weitere nicht axial ausgerichtete Strahlen, die in durchgezogenen Strichen mit entsprechenden Pfeilen dargestellt sind, werden um insgesamt 180° gespiegelt. Das Zwischenbild befindet sich ebenfalls in einer mittleren Lage. Der Übergang von Figur 8a zur Figur 8b beinhaltet eine entsprechend der Schwingungsrichtung 17 erfolgte Verschiebung nach rechts. Dabei verschiebt sich die Lage des Zwischenbildes nach oben entsprechend der Bewegung 29. Die Umlenkung der Achsstrahlen bleibt identisch. Der Strahlengang weiterer nicht axial geführter Strahlen verändert sich entsprechend. Der Übergang von der Figur 8a zu der Figur 8c besteht darin, daß sich entsprechend der Schwingungsrichtung 17 das Spiegelsystem 30 von der Null-Lage 32 nach links verschoben hat. Die Spiegelung der Achsstrahlen 28 bleibt weiterhin bezogen auf die Spiegelrichtungen unverändert. Die Spiegelung anderer nicht axial geführter Strahlen verändert sich derart, daß die Bewegung 29 des Zwischenbildes 29 nach unten gerichtet ist.

Figur 9 zeigt eine Variante der Erfindung, wobei die Strahlengänge lediglich einmal durch die Abbildungsoptik 31 geführt sind. Die Umlenkung der Strahlengänge auf das Objekt erfolgt über einen zusätzlichen Umlenkspiegel 33.

## Patentansprüche

1. Optischer Abstandssensor nach dem konfokalen optischen Abbildungsprinzip zur Ermittlung von Abstands- bzw. Höhenwerten einer Oberfläche (13), insbesondere zur dreidimensionalen Oberflächenvermessung, mit
- einer Sendeeinheit (1) mit mindestens einer punktförmigen Lichtquelle (1.1, 1.2,...), die auf eine Oberfläche (13) eines Messobjektes (12) abgebildet wird,
- einer Empfangseinheit (4) mit mindestens einem zur punktförmigen Lichtquelle (1.1, 1.2,...) konfokal im bildseitigen Messbereich angeordneten punktförmigen Empfänger (4.1, 4.2,...),
- einer im Wesentlichen koaxialen Führung von Beleuchtungsund Messstrahl (7, 8),
**dadurch gekennzeichnet, dass**
die optische Wegstrecke zwischen der Empfangseinheit (4) und der dazu nächstliegenden Optik durch Schwingung der Empfangseinheit (4) in Richtung des optischen Strahlenganges variierbar ist und mittels eines Peakdetektors (16) maximale Leuchtdichten auf der Empfangseinheit (4) feststellbar sind, wobei die jeweils korrespondierenden optischen Wegstrecken dem jeweiligen Höhenwert des aktuellen Abtastpunktes (18) entsprechen.

2. Optischer Abstandssensor nach dem konfokalen optischen Abbildungsprinzip zur Ermittlung von Abstands- bzw. Höhenwerten einer Oberfläche (13), insbesondere zur dreidimensionalen Oberflächenvermessung, mit
- einer Sendeeinheit (1) mit mindestens einer punktförmigen Lichtquelle (1.1, 1.2,...), die auf eine Oberfläche (13) eines Objektes (12) abgebildet wird,
- einer Empfangseinheit (4) mit mindestens einem zur punktförmigen Lichtquelle (1.1, 1.2,...) konfokal im bildseitigen Messbereich angeordneten punktförmigen Empfänger (4.1., 4.2,...),
- einer im Wesentlichen koaxialen Führung von Beleuchtungsund Messstrahl(7, 8),
**dadurch gekennzeichnet, dass**
- die optische Wegstrecke zwischen der Empfangseinheit (4) und dem Objekt (12) und zwischen Sendeeinheit (1) und Objekt (12) durch den Einsatz eines in Richtung des Strahlenganges schwingenden aus zwei um 90° zueinander geneigten Spiegeln bestehenden und im Fokusbereich der Abbildungsoptik (31) in Bezug auf den Sendestrahl positionierten Spiegelsystems (30) variierbar ist,
- der Strahlengang zwischen der Sendeeinheit (1) und dem Objekt (12) und zwischen Empfangseinheit (4) und dem Objekt (12) zweimal symmetrisch zueinander über eine Abbildungsoptik (31) geführt ist,
- der Strahlengang zwischen den beiden Durchgängen durch die Abbildungsoptik (31) durch das Spiegelsystem (30) jeweils um 180° umgelenkt ist und einen Parallelversatz aufweist,
- mittels eines Peakdetektors (16) maximale Leuchtdichten auf der Empfangseinheit feststellbar sind.

3. Optischer Abstandssensor nach dem konfokalen optischen Abbildungsprinzip zur Ermittlung von Abstands- bzw. Höhenwerten einer Oberfläche (13), insbesondere zur dreidimensionalen Oberflächenvermessung, mit
- einer Sendeeinheit (1) mit mindestens einer punktförmigen Lichtquelle (1.1, 1.2,...), die auf eine Oberfläche (13) eines Objektes (12) abgebildet wird,
- einer Empfangseinheit (4) mit mindestens einem zur punktförmigen Lichtquelle (1.1, 1.2,...) konfokal im bildseitigen Messbereich angeordneten punktförmigen Empfänger (4.1., 4.2,...),
- einer im Wesentlichen koaxialen Führung von Beleuchtungsund Messstrahl,
**dadurch gekennzeichnet, dass**
- die optische Wegstrecke zwischen der Empfangseinheit (4) und dem Objekt (12) und zwischen Sendeeinheit (1) und Objekt (12) durch den Einsatz eines in Richtung des Strahlenganges schwingenden, aus zwei um 90° zueinander geneigten Spiegeln bestehenden und im Fokusbereich der Abbildungsoptik (31) in Bezug auf den Sendestrahl positionierten Spiegelsystems (30) variierbar ist,
- der Strahlengang im koaxialen Bereich einmalig über eine Abbildungsoptik (31) geführt ist und vom schwingenden Spiegelsystem (30) in Richtung auf das Objekt (12) über einen zusätzlichen Umlenkspiegel (33) umgeleitet ist,
- der koaxiale Strahlengang zwischen der Abbildungsoptik (31) und dem Umlenkspiegel (33) durch das Spiegelsystem (30) um 180° umgelenkt ist und einen Parallelversatz aufweist und
- mittels eines Peakdetektors (16) maximale Leuchtdichten auf der Empfangseinheit feststellbar sind.

4. Optischer Abstandssensor nach Anspruch 1, 2 oder 3,
**gekennzeichnet durch**
mehrere in der Sendeeinheit (1) enthaltene punktförmige Lichtquellen (1.1, 1.2, ...) und mehrere korrespondierende, in der Empfangseinheit (4) enthaltene punktförmige Empfänger (4.1, 4.2,...) gleicher Anzahl, wobei die punktförmigen Lichtquellen (1.1, 1.2, ...) und die punktförmigen Empfänger (4.1, 4.2,...) jeweils zeilenförmig in einer zur optischen Achse orthogonalen Ebene angeordnet sind und auf der Oberfläche (13) eine geradlinige Reihe von Abtastpunkten (18) erzeugbar ist.

5. Optischer Abstandssensor nach einem der Ansprüche 1 bis 4,
**gekennzeichnet durch**
eine serielle Abtastung über Abtastpunkte (18) **durch** jeweils zugehörige korrespondierende punktförmige Lichtquellen (1.1, 1.2,...) und punktförmige Empfänger (4.1, 4.2,...).

6. Optischer Abstandssensor nach einem der Ansprüche 1 bis 5,
**gekennzeichnet durch**
eine unterschiedliche Frequenzmodulation des Lichtes an unterschiedlichen punktförmigen Lichtquellen (1.1, 1.2) und Einsatz von auf die jeweiligen Frequenzen angepassten Bandpassfiltern (15) hinter der Empfangseinheit (4).

7. Optischer Abstandssensor nach einem der Ansprüche 4 bis 6,
**gekennzeichnet durch**
die Anordnung von punktförmigen Lichtquellen in einer geradlinigen Reihe und von korrespondierenden punktförmigen Empfängern zur Ausbildung einer geradlinigen Reihe von Abtastpunkten (18), wobei die Reihe der Abtastpunkte (18) mit einem Verfahrweg (24) des Abstandsensors einen Winkel von ungefähr 45° bildet und für die Strahlführung jedes Abtastpunktes (18) das konfokale optische Abbildungsprinzip gilt.

8. Verfahren zum Betrieb eines optische Abstandssensors entsprechend einem der Ansprüche 1 bis 6,
**dadurch gekennzeichnet, dass**
der Verfahrweg (24) eines Abstandssensors eine vorgegebene Ausrichtung relativ zu orthogonal ausgebildeten Strukturen eines Objektes (12) aufweist.

9. Verfahren nach Anspruch 8,
**dadurch gekennzeichnet, dass**
die Oberfläche (13) des Messobjektes (12) partiell abgetastet wird, wobei bestimmte wesentliche Bereiche der Oberfläche (13) erfassbar sind.

10. Verwendung eines optischen Abstandssensors nach einem der Ansprüche 1 bis 7 zum Abtasten der Oberfläche von elektronischen Bauelementen (26).

11. Verwendung nach Anspruch 10,
**dadurch gekennzeichnet, dass**
im Wesentlichen die Randbereiche von den elektronischen Bauelementen (26) abgetastet werden.

## Claims

1. Optical proximity sensor according to the confocal optical imaging principle for determining distance and/or height values of a surface (13), in particular for three-dimensional surface measurement, having
- a transmitting unit (1) having at least one point light source (1.1, 1.2,...), which is imaged on a surface (13) of an object (12) to be measured,
- a receiving unit (4) having at least one point receiver (4.1, 4.2,...), which is arranged confocally with respect to the point light source (1.1, 1.2,...), in the measurement region on the image side,
- essentially coaxial guidance of illumination and measurement beams (7, 8),
**characterized in that** the optical path length between the receiving unit (4) and the optical arrangement nearest thereto can be varied by oscillation of the receiving unit (4) in the direction of the optical beam path and a peak detector (16) can be used to establish maximum luminances on the receiving unit (4), in which case the respectively corresponding optical path lengths correspond to the respective height value of the current scanning point (18).

2. Optical proximity sensor according to the confocal optical imaging principle for determining distance and/or height values of a surface (13), in particular for three-dimensional surface measurement, having
- a transmitting unit (1) having at least one point light source (1.1, 1.2,...), which is imaged on a surface (13) of an object (12),
- a receiving unit (4) having at least one point receiver (4.1., 4.2,...), which is arranged confocally with respect to the point light source (1.1, 1.2,...), in the measurement region on the image side,
- essentially coaxial guidance of illumination and measurement beams (7,8),
**characterized in that**
- the optical path length between the receiving unit (4) and the object (12) and between the transmitting unit (1) and the object (12) can be varied by the use of a mirror system (30) which oscillates in the direction of the beam path, comprises two mirrors, which are inclined by 90° with respect to one another, and is positioned in the region of focus of the imaging optic (31) with regard to the transmitted beam,
- the beam path between the transmitting unit (1) and the object (12) and between the receiving unit (4) and the object (12) is guided twice symmetrically with respect to one another via an imaging optic (31),
- the beam path between the two passages through the imaging optic (31) is in each case deflected through 180° by the mirror system (30) and has a parallel offset,
- a peak detector (16) can be used to establish maximum luminances on the receiving unit.

3. Optical proximity sensor according to the confocal optical imaging principle for determining distance and/or height values of a surface (13), in particular for three-dimensional surface measurement, having
- a transmitting unit (1) having at least one point light source (1.1, 1.2,...), which is imaged on a surface (13) of an object (12),
- a receiving unit (4) having at least one point receiver (4.1, 4.2,...), which is arranged confocally with respect to the point light source (1.1, 1.2,...), in the measurement region on the image side,
- essentially coaxial guidance of illumination and measurement beams,
**characterized in that**
- the optical path length between the receiving unit (4) and the object (12) and between the transmitting unit (1) and the object (12) can be varied by the use of a mirror system (30) which oscillates in the direction of the beam path, comprises two mirrors, which are inclined by 90° with respect to one another, and is positioned in the region of focus of the imaging optic (31) with regard to the transmitted beam,
- the beam path in the coaxial region is guided once via an imaging optic (31) and is diverted by the oscillating mirror system (30) in the direction of the object (12) via an additional deflection mirror (33),
- the coaxial beam path between the imaging optic (31) and the deflection mirror (33) is deflected through 180° by the mirror system (30) and has a parallel offset, and
- a peak detector (16) can be used to establish maximum luminances on the receiving unit.

4. Optical proximity sensor according to Claim 1, 2 or 3,
**characterized by** a plurality of point light sources (1.1, 1.2,...) contained in the transmitting unit (1) and a plurality of corresponding point receivers (4.1, 4.2,...) contained in the same number in the receiving unit (4), the point light sources (1.1, 1.2,...) and the point receivers (4.1, 4.2,...) in each case being arranged linearly in a plane which is orthogonal to the optical axis, and it being possible to generate a row of scanning points (18) in a straight line on the surface (13).

5. Optical proximity sensor according to one of Claims 1 to 4,
**characterized by** serial scanning via scanning points (18) by means of respectively associated, corresponding point light sources (1.1, 1.2,...) and point receivers (4.1, 4.2,...).

6. Optical proximity sensor according to one of Claims 1 to 5,
**characterized by** different frequency modulation of the light at different point light sources (1.1, 1.2) and use of bandpass filters (15) behind the receiving unit (4), which filters are matched to the respective frequencies.

7. Optical proximity sensor according to one of Claims 4 to 6,
**characterized by** the arrangement of point light sources in a row in a straight line and of corresponding point receivers for the formation of a row of scanning points (18) in a straight line, the row of scanning points (18) forming an angle of approximately 45° with a travel path (24) of the proximity sensor, and the confocal optical imaging principle applying to the beam guidance of each scanning point (18).

8. Method for operating an optical proximity sensor according to one of Claims 1 to 6,
**characterized in that** the travel path (24) of a proximity sensor has a predetermined orientation relative to structures of an object (12) which are of orthogonal design.

9. Method according to Claim 8,
**characterized in that** the surface (13) of the object (12) to be measured is partially scanned, it being possible to sense specific, significant regions of the surface (13).

10. Use of an optical proximity sensor according to one of Claims 1 to 7 for scanning the surface of electronic components (26).

11. Use according to Claim 10,
**characterized in that** essentially the edge regions of the electronic components (26) are scanned.

## Revendications

1. Capteur optique de distance suivant le principe de reproduction optique confocale en vue de déterminer des valeurs de distance ou de hauteur d'une surface (13), notamment en vue de mesurer une surface en trois dimensions, comprenant
- une unité (1) d'émission ayant au moins une source (1,1, 1.2 ...) lumineuse ponctuelle qui est reproduite sur une surface (13) d'un objet (12) à mesurer,
- une unité (4) de réception ayant au moins un récepteur (4.1, 4.2, ...) ponctuel disposée dans la zone de mesure côté image de manière confocale à la source lumineuse (1.1, 1.2, ...) ponctuelle,
- un guidage sensiblement coaxial d'un faisceau (7, 8) d'éclairage et de mesure,
**caractérisé en ce que**
le trajet optique entre l'unité (4) de réception et l'optique qui en est la plus proche peut être modifié en faisant osciller l'unité (4) de réception dans la direction de la marche optique des rayons et les luminances maximum sur l'unité (4) de réception peuvent être détectées au moyen d'un détecteur (16) de crête, les trajets optiques correspondants correspondant respectivement à la hauteur respective du point (18) instantané de balayage.

2. Capteur optique de distance suivant le principe de reproduction optique confocale en vue de déterminer des valeurs de distance ou de hauteur d'une surface (13), notamment en vue de mesurer une surface en trois dimensions, comprenant
- une unité (1) d'émission ayant au moins une source (1.1, 1.2, ...) lumineuse ponctuelle qui est reproduite sur une surface (13) d'un objet (12) à mesurer,
- une unité (4) de réception ayant au moins un récepteur (4.1, 4.2, ...) ponctuel disposée dans la zone de mesure côté image de manière confocale à la source lumineuse (1.1, 1.2, ...) ponctuelle,
- un guidage sensiblement coaxial d'un faisceau (7, 8) d'éclairage et de mesure ,
**caractérisé en ce que**
- le trajet optique entre l'unité (4) de réception et l'objet (12) et entre l'unité (1) d'émission et l'objet (12) peut être modifié par l'utilisation d'un système (30) oscillant dans la direction de marche des rayons, constitué de deux miroirs inclinés l'un par rapport à l'autre de 90° et placé par rapport aux rayons d'émission dans la zone focale de l'optique (31) de reproduction,
- la marche des rayons entre l'unité (1) d'émission et l'objet (12) et entre l'unité (4) de réception et l'objet (12) passe deux fois symétriquement l'une par rapport à l'autre par une optique (31) de reproduction,
- la marche des rayons entre les deux passages par l'optique (31) de reproduction est déviée par le système (30) à miroir respectivement de 180° et présente un décalage parallèle,
- les luminances maximum sur l'unité de réception peuvent être détectées au moyen d'un détecteur (16) de crête.

3. Capteur optique de distance, suivant le principe de reproduction optique confocale en vue de déterminer des valeurs de distance ou de hauteur d'une surface (13), notamment en vue de mesurer une surface en trois dimensions, comprenant
- une unité (1) d'émission ayant au moins une source (1.1, 1.2, ...) lumineuse ponctuelle qui est reproduite sur une surface (13) d'un objet (12) à mesurer,
- une unité (4) de réception ayant au moins un récepteur (4.1, 4.2, ...) ponctuel disposée dans la zone de mesure côté image de manière confocale à la source lumineuse (1.1, 1.2, ...) ponctuelle,
- un guidage sensiblement coaxial d'un faisceau d'éclairage et de mesure,
**caractérisé en ce que**
- - le trajet optique entre l'unité (4) de réception et l'objet (12) et entre l'unité (1) d'émission et l'objet (12) peut être modifié par l'utilisation d'un système (30) oscillant dans la direction de marche des rayons, constitué de deux miroirs inclinés l'un par rapport à l'autre de 90° et placé par rapport aux rayons d'émission dans la zone focale de l'optique (31) de reproduction,
- la marche des rayons passe dans la région coaxiale une fois sur une optique (31) de reproduction et est déviée par le système (30) oscillant de miroirs en direction de l'objet (12) sur un miroir (33) supplémentaire de déviation,
- la marche coaxiale des rayons entre l'optique (31) de reproduction et le miroir (33) de déviation est déviée de 180° par le système (30) de miroirs et présente un décalage parallèle et
- les luminances maximum sur l'unité de réception peuvent être détectées au moyen d'un détecteur (16) de crête.

4. Capteur optique de distance suivant la revendication 1, 2 ou 3,
**caractérisé par** plusieurs sources lumineuses (1.1, 1.2, ...) ponctuelles contenues dans l'unité (1) d'émission et par plusieurs récepteurs (4.1, 4.2, ...) ponctuels correspondants contenus en nombre égal dans l'unité (4) de réception, les sources lumineuses (1.1, 1.2, ...) et les récepteurs (4.1, 4.2, ...) ponctuels étant disposés respectivement sous la forme de lignes dans un plan orthogonal à l'axe optique et une rangée rectiligne de points (18) de balayage pouvant être produite sur la surface (13).

5. Capteur optique de distance suivant l'une des revendications 1 à 4, **caractérisé par**
un balayage série sur des points (18) de balayage, par des sources lumineuses (1.1, 1.2, ...) ponctuelles correspondantes et des récepteurs (4.1, 4.2, ...) ponctuels associés.

6. Capteur optique de distance suivant l'une des revendications 1 à 5, **caractérisé par**
une modulation de fréquence différente de la lumière en des sources lumineuses (1.1, 1.2) différentes et par l'utilisation de filtres (15) à bande passante adaptés aux fréquences respectives derrière l'unité (4) de réception.

7. Capteur optique de distance suivant l'une des revendications 4 à 6, **caractérisé par**
la disposition de sources lumineuses ponctuelles suivant une rangée rectiligne et de récepteurs ponctuels correspondants pour constituer une rangée rectiligne de points (18) de balayage, la rangée des points (18) de balayage faisant, avec un trajet (24) de déplacement du capteur de distance, un angle d'environ 45° et le principe de reproduction optique confocale valant pour le guidage du faisceau de chaque point (18) de balayage.

8. Procédé pour faire fonction un capteur optique de distance suivant l'une des revendications 1 à 6,
**caractérisé en ce que** le trajet (24) de déplacement d'un capteur de distance a une direction prescrite par rapport à des structures d'un objet (12) qui sont constituées de manière orthogonale.

9. Procédé suivant la revendication 8,
**caractérisé en ce que** la surface de l'objet (12) à mesurer est analysée partiellement, des parties essentielles déterminées de la surface (13) pouvant être détectées.

10. Utilisation d'un capteur optique de distance suivant l'une des revendications 1 à 7 pour analyser la surface de composants (26) électroniques.

11. Utilisation suivant la revendication 10,
**caractérisé en ce que** ce sont essentiellement les parties de bord des composants (26) électroniques qui sont analysées.
